# EUROPEAN PATENT APPLICATION

(11) **EP 4 173 516 A1**
(43) Date of publication of application: **03.05.2023**
(21) Application number: 22204516.3
(22) Date of filing: 28.10.2022
(51) Int. Cl.: A43B 13/02, A43B 13/22, C08H 1/06, C08J 5/04, C08K 7/02, C08L 7/00, C08L 9/00, C08L 67/04, C08L 75/04

(54) **USE OF LEATHER FIBERS AS ANTI-SLIP AGENTS IN POLYMERIC COMPOSITIONS AND ARTICLES OBTAINED THEREWITH**

(30) Priority: 28.10.2021 IT 202100027722
(71) Applicant: Sciarada Industria Conciaria S.p.A., 56022 Castelfranco di Sotto (IT); Alma Mater Studiorum Universita di Bologna, 40126 Bologna (IT)
(72) Inventor: COLONNA, Martino, 40122 Bologna (IT); PARISI, Mariafederica, 40134 Bologna (IT)
(74) Representative: Cattaneo, Elisabetta

(57) **Abstract**

The present invention relates to the use of leather fibers as anti-slip agents in polymeric compositions comprising at least one polymer selected from the group consisting of polyester, polyolefin, polyamide, polyurethane, natural rubber, and synthetic elastomer, particularly for making soles for shoes.

## Description

### FIELD OF THE INVENTION

The present invention relates to the use of leather fibers as anti-slip agents in polymeric compositions, and articles obtained therewith, such as for example soles for shoes.

### BACKGROUND ART

There are numerous activities where adequate adhesion between two surfaces is necessary.

Research is therefore always active in studying and developing materials that have suitable surface characteristics to ensure adequate adhesion properties. For example, in the footwear sector, the adhesion properties of the soles to the ground or to the floor is an undoubtedly important aspect, both for leisure or sporting uses and for work-related uses.

In particular, the use of work footwear is useful and required where the occupation forces long shifts in standing or walking for a large part of the day in order to guarantee maximum safety for the worker, and among the requirements that work footwear must generally meet is an adequate slip resistance capacity. Slips are in fact among the main causes of accidents at work and the main cause of slip accidents is inadequate slip resistance of footwear on the floors.

It is therefore not surprising that, although not all countries and international bodies unequivocally and uniformly regulate the requirements for work footwear, the requirements for this type of product include slip resistance and it is also not surprising that designing safety footwear that reduces the risk of slipping is a key objective for footwear manufacturers.

Although the slip resistance of an object such as a shoe on a surface also depends on multiple and different "external" factors that cannot always be controlled (human factors, just to list one), the main design factor to obtain a good slip resistance is to achieve a high level of friction between the floor and the footwear itself: the greater the friction, the greater the slip resistance will be - other things being equal.

Therefore, although the slip resistance does not depend solely on the friction between two objects, for example a shoe and a floor, shoe manufacturers have long been constantly looking for new materials that make it possible to obtain shoes, and in particular shoe soles, capable of generating high coefficients of friction with various surfaces, such as floors, road sidewalks, or other types of internal and external coatings intended for walking.

The coefficient of friction (COF) is in fact defined by the ratio between the friction force between two bodies and the force that presses them together, and is a parameter widely used to measure the slip resistance of one object on another. The coefficient of friction can be static or dynamic: the coefficient of static friction refers to the friction between two contact surfaces before the movement starts, while the coefficient of dynamic friction is the friction considered during the movement. Both types of coefficient of friction depend on the characteristics of the pair of contact surfaces, and in particular also on the materials of which the two contact surfaces are made.

In the field of materials science applied to the footwear sector, there is therefore a continuous demand for materials and additives suitable for the production of soles capable of simultaneously expressing high friction coefficients with various surfaces such as floors, road surfaces, or in general the various outdoor environments, in a wide spectrum of environmental conditions.

Another context in which the anti-slip capacity for footwear is crucial is, for example, that of snow shoes or to be used in environments covered by ice, snow, water. Ski boots, as well as various types of footwear for climbing, trekking or other activities, whether sporting or ordinary, require footwear with high-performance soles in these environments in terms of slip-resistant properties.

In addition, there are also many other sectors, in addition to the footwear sector, which would benefit enormously from more slip-resistant materials.

Just think of the transport sector, in particular the road transport sector, where there is a continuous search for tyres for vehicles, especially for heavy-load vehicles, that are able to provide adequate road safety guarantees, increasing their adhesion on the road surfaces (and therefore increasing the friction between the rubber material of the wheels and the road surface itself).

In general, the sectors in which these slip-resistant characteristics are highly desirable are, however, many, such as the personal and household accessories sector, e.g. for the manufacture of items such as trivets, mobile phone covers, underlays and the surfaces of certain sports equipment in contact with the body (e.g. the surface of a skateboard), as well as the outdoor and industrial supplies sector, for example for the supply of highly slip-resistant flooring (think of the materials used to cover athletics tracks or the tiling used in children's playgrounds).

The aim of the present invention is therefore to develop a new material capable of expressing a high coefficient of friction value and thus being effectively used for the production of articles, such as soles and footwear in general, with slip-resistant properties.

### SUMMARY OF THE INVENTION

The Applicant has now found that this aim is achievable using leather fibers as a non-slip agent in polymeric compositions comprising at least one polymer selected from the group consisting of: polyester, polyolefin, polyamide, polyurethane, natural rubber and synthetic elastomer.

In particular, in a first aspect thereof the present invention therefore refers to the use of leather fibers as a non-slip agent in a polymeric composition comprising at least one polymer selected from the group consisting of: polyester, polyolefin, polyamide, polyurethane, natural rubber and synthetic elastomer.

In fact, the Applicant has found that leather fibers cause a significant increase in the coefficient of friction of polymeric compositions selected from the group consisting of: polyester, polyolefin, polyamide, polyurethane, natural rubber and synthetic elastomer, thus resulting in an improvement in the anti-slip properties. This therefore makes said compositions suitable for obtaining articles in which high anti-slip properties, such as for example shoe soles, are desired. Furthermore, the Applicant has noted that leather processing is one of the most important and widespread industries globally and that the production of leather goods, however, generates large quantities of leather waste, most of which is currently disposed of in landfills by the tanning industries, thus representing not only a waste of resources but also a cause of environmental pollution. The Applicant has therefore found that the possibility of using leather fibers as a non-slip agent in polymeric compositions that can be used, for example, for the manufacture of articles such as soles for footwear, can therefore offer an alternative to the mere disposal of said leather waste in landfills, thereby contributing to making the entire leather processing chain more eco-sustainable. In a further aspect thereof, therefore, the present invention further refers to an anti-slip sole comprising a polymeric composition comprising a polymeric matrix comprising at least one polymer selected from the group consisting of: polyester, polyolefin, polyamide, polyurethane, natural rubber, and synthetic elastomer, and at least one leather fiber dispersed in said polymeric matrix.

Thanks to the increase in the coefficient of friction resulting from the use of leather fibers in the polymeric composition, in fact, the latter is an ideal material for the creation of non-slip soles.

The Applicant has further found that the characteristics of mutual compatibility between the polymers selected in the group consisting of: polyester, polyolefin, polyamide, polyurethane, natural rubber and synthetic elastomer and leather fibers, also determine the possibility of making said non-slip soles by means of a simple and efficient process, which therefore makes their manufacture not particularly burdensome and indeed competitive.

In a further aspect, therefore, the present invention further refers to a process of preparing a non-slip sole comprising the steps of:
a. preparing a quantity of leather fibers;
b. dispersing said quantity of leather fibers according to step a. in at least one polymer selected from the group consisting of: polyester, polyolefin, polyamide, polyurethane, natural rubber and, melt synthetic elastomer, so as to obtain a polymeric composition comprising a matrix comprising at least one polymer selected from the group consisting of: polyester, polyolefin, polyamide, polyurethane, natural rubber, and synthetic elastomer and at least one leather fiber dispersed in said polymeric matrix; and
c. forming an anti-slip sole with the polymer composition of step b.

The non-slip soles according to the present invention are therefore usable for the production of footwear capable of reducing the slippage of the user thanks to a better adhesion property of the soles to the ground or to the floor, both for leisure or sporting uses and for work-related uses.

In a further aspect, therefore, the present invention refers to a shoe comprising the non-slip sole according to the present invention.

### BRIEF DESCRIPTION OF THE DRAWINGS

Figure 1 shows the FT-IR spectrum of the two types of leather waste used in Example 1 and Example 2;
Figure 2 shows the light microscope photomicrographs of the leather fibers according to Example 1; and
Figure 3 shows the light microscope photomicrographs of the leather fibers according to Example 2.

### DETAILED DESCRIPTION OF THE INVENTION

In a first aspect thereof the present invention refers to the use of leather fibers as a non-slip agent in a polymeric composition comprising at least one polymer selected from the group consisting of: polyester, polyolefin, polyamide, polyurethane, natural rubber and synthetic elastomer.

In fact, the Applicant has found that leather fibers in fact cause a significant increase in the coefficient of friction of polymeric compositions selected from the group consisting of: polyester, polyolefin, polyamide, polyurethane, natural rubber and synthetic elastomer, thus resulting in an improvement in the anti-slip properties. This therefore makes said compositions suitable for obtaining articles in which high anti-slip properties, such as for example shoe soles, are desired.

The Applicant has also observed that leather processing is one of the most important and widespread industries globally and that the production of leather goods, however, generates large quantities of leather waste, most of which is currently disposed of in landfills by the tanning industries, thus representing not only a waste of resources but also a cause of environmental pollution. The Applicant has therefore found that the possibility of using leather fibers as a sliding agent in polymeric compositions that can be used, for example, for the manufacture of articles such as soles for footwear, can therefore offer an alternative to the mere disposal of said leather waste in landfills, thereby contributing to making the entire leather processing chain more eco-sustainable. In the context of this description and in the subsequent claims, all numerical magnitudes indicating quantities, parameters, percentages, and so on are to be understood as preceded in all circumstances by the term "about" unless otherwise indicated. In addition, all the ranges of numerical magnitude include all possible combinations of the maximum and minimum numerical values and all the possible intermediate ranges, in addition to those specifically indicated below.

In the context of the present description and in the subsequent claims, the term "leather" means a material mainly consisting of collagen, which in the current language is also called "skin" or "leather", and which is obtained from the skin of animals following a tanning process.

For the purposes of the present invention, leather fiber must be understood as leather in any way and in any fragmented size, as well as waste leather from industrial processes, such as those of the tanning industry, i.e. leather discarded as lacking the necessary quality standards, rather than leather deriving from the waste of leather processing, for example shaving waste, clippings of shearing and in any case any type of leather however obtained in any size and quality.

In the context of the present description and in the subsequent claims, the term "post-consumer leather" means leather obtained, typically but not exclusively by recycling processes, from manufactured goods at the end of the life cycle that contain it.

The present invention can be presented in one or more of its aspects or one or more of the preferred characteristics reported below, which can be combined with one another according to the application requirements.

The present invention refers to the use of leather fibers as a non-slip agent in a polymeric composition.

Preferably, said leather fibers have clusters of leather fibers with an average section diameter ranging from 10 µm to 200 µm, preferably from 20 µm to 100 µm.

In the context of the present description and in the subsequent claims, the term "fiber cluster" refers to complex matrices consisting of single fibers and fiber aggregates intimately linked together.

The leather fibers are used in the present invention in a polymeric composition comprising at least one polymer selected from the group consisting of: polyester, polyolefin, polyamide, polyurethane, natural rubber and synthetic elastomer thanks to the anti-slip properties capable of conferring on the polymeric composition itself.

Preferably, said polymeric composition comprises from 2% to 50% by weight, more preferably from 5% to 45% by weight of said leather fibers, with respect to the overall weight of the polymeric composition.

Preferably, said leather fibers comprise, more preferably consist of, a shredded product deriving from a step of a tanning process selected from the group consisting of: skiving, shaving, trimming or from leather post-consumer.

In use according to the present invention, the polymeric composition comprises at least one polymer selected from the group consisting of: polyester, polyolefin, polyamide, polyurethane, natural rubber and synthetic elastomer.

Preferably, said polyester is a polyhydroxyalkanoate (PHA), even more preferably selected from the group consisting of polylactic acid, polyhydroxybutyrate, polyhydroxyvalerate, and polyhydroxybutyrate-co-valerate.

Preferably, said polyolefin is polyethylene, more preferably low density polyethylene, high density polyethylene possibly mixed with other polyolefin-based polymers (polypropylene) or copolymerized with other olefinic and diene monomers). These polymers can in turn be mixed with natural or synthetic rubbers to increase their impact resistance.

Preferably, said polyamide is polylaurolactam (nylon 12) or polyamide 11 (nylon 11) derived from the polymerization of 11-aminoundecanoic acid.

Preferably, said polyurethane is selected from the group consisting of thermoplastic polyurethanes derived from aromatic isocyanates and flexible segments based on polyether or polyester.

Said natural rubber is cis-1,4-Polyisoprene.

Preferably said synthetic elastomer is NBR rubber (nitrile butadiene rubber), BR rubber (butadiene rubber), styrene butadiene rubber (SBR), butadiene-ethylene-propylene terpolymers (EPDM).

Preferably, the polymeric composition comprises from 50 to 98% by weight, more preferably from 55 to 95% by weight, even more preferably from 60 to 90% by weight, of said at least one polymer, with respect to the total weight of the polymeric composition.

In a preferred embodiment, the at least one polymer of the polymeric composition is a polyester. Preferably, in said case the composition comprises from 10% to 50% of said leather fibers, with respect to the overall weight of the polymeric composition. More preferably from 30 to 50%.

In a preferred embodiment, the at least one polymer of the polymeric composition is a polyurethane. Preferably, in said case the composition comprises from 10% to 50% of said leather fibers, with respect to the overall weight of the polymeric composition. More preferably from 20 to 40%.

In a preferred embodiment, the at least one polymer of the polymeric composition is a synthetic elastomer or a natural rubber. Preferably, in said case, the composition comprises from 2 % to 20 % of said leather fibers, with respect to the total weight of the polymeric composition. More preferably from 2 to 10%.

The use of the leather fibers according to the present invention leads to a significant increase in the coefficient of friction of polymeric compositions selected from the group consisting of: polyester, polyolefin, polyamide, polyurethane, natural rubber and synthetic elastomer, thus resulting in an improvement of the anti-slip properties. This makes said compositions suitable for obtaining articles in which high anti-slip properties are desired, such as for example shoe soles.

In a further aspect thereof the present invention further refers to an anti-slip sole comprising a polymeric composition comprising a polymeric matrix comprising at least one polymer selected from the group consisting of: polyester, polyolefin, polyamide, polyurethane, natural rubber, and synthetic elastomer, and at least one leather fiber dispersed in said polymeric matrix.

Thanks to the increase in the coefficient of friction resulting from the use of leather fibers in the polymeric composition, in fact, the latter is an ideal material for the creation of non-slip soles. The advantages of the sole according to this further aspect have therefore already been outlined with reference to the use according to the first aspect of the invention and are not repeated herein.

The leather fibers of the sole according to the present invention may exhibit one or more of the preferred characteristics of the leather fibers of the use according to the first aspect of the present invention, which may be combined with each other depending on the application needs.

Preferably, in the non-slip sole according to the present invention said at least one leather fiber has a cluster of leather fibers with an average section diameter ranging from 10 µm to 200 µm, preferably from 20 µm to 100 µm.

The Applicant has further found that the characteristics of mutual compatibility between the polymers selected in the group consisting of: polyester, polyolefin, polyamide, polyurethane, natural rubber and synthetic elastomer and leather fibers, also determine the possibility of making a non-slip soles by means of a simple and efficient process, which therefore makes its manufacture not particularly burdensome and indeed competitive.

In a further aspect, therefore, the present invention further refers to a process of preparing a non-slip sole comprising the steps of:
a. preparing a quantity of leather fibers;
b. dispersing said quantity of leather fibers according to step a. in at least one polymer selected from the group consisting of: polyester, polyolefin, polyamide, polyurethane, natural rubber and, melt synthetic elastomer, so as to obtain a polymeric composition comprising a matrix comprising at least one polymer selected from the group consisting of: polyester, polyolefin, polyamide, polyurethane, natural rubber, and synthetic elastomer and at least one leather fiber dispersed in said polymeric matrix; and
c. forming an anti-slip sole with the polymer composition of step b.

When step (b) of the non-slip sole preparation process is performed with a natural rubber or a synthetic elastomer, said process may further comprise a vulcanization or crosslinking step of the polymer.

The leather fibers and polymers used in the context of the process according to the present invention may exhibit one or more of the preferred characteristics of the leather fibers and polymers of the polymeric composition described with reference to the use according to the first aspect of the present invention, which may be combined with each other depending on the application needs.

The non-slip sole according to the present invention is usable for the production of footwear capable of reducing the slippage of the user thanks to a better adhesion property to the ground or to the floor, both for leisure or sporting uses and for work-related uses.

In a further aspect, therefore, the present invention refers to a shoe comprising the non-slip sole according to the present invention.

The advantages of the footwear according to this further aspect have therefore already been outlined with reference to the use according to the first aspect of the invention and are not repeated herein.

The invention is now illustrated by means of some Examples to be understood for illustrative and non-limiting purposes.

### EXPERIMENTAL PART

### EXAMPLE 1 - preparation of leather fibers (DICAM)

Some leather waste from a step of shaving a wet blue was first analysed by FT-IR infrared spectrometry with ATR sensor.

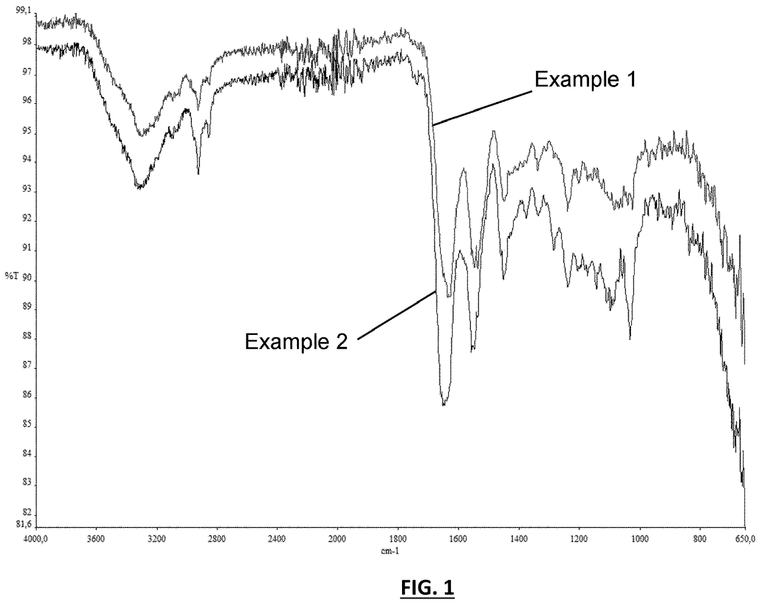

Figure 1 shows the FT-IR spectrum obtained, in which it is possible to observe the presence of humidity (band enlarged to about 3500 cm⁻¹) in addition to the typical signals of collagen (amine, carbonyl and amide groups, bands between 1750 and 1450 cm⁻¹) of which the leather is made.

Said waste was chopped into pieces of about 1 cm in size and immediately afterwards cooled in liquid nitrogen.

The waste thus treated was then fed to a discontinuous IKA model M20 mill cooled with liquid nitrogen for a grinding time of about 15 minutes.

The fibers thus obtained were characterised under the S.E.M. scanning electron microscope with secondary electrons, revealing the presence in the leather sample of fibre clusters with an average diameter of about 30 µm.

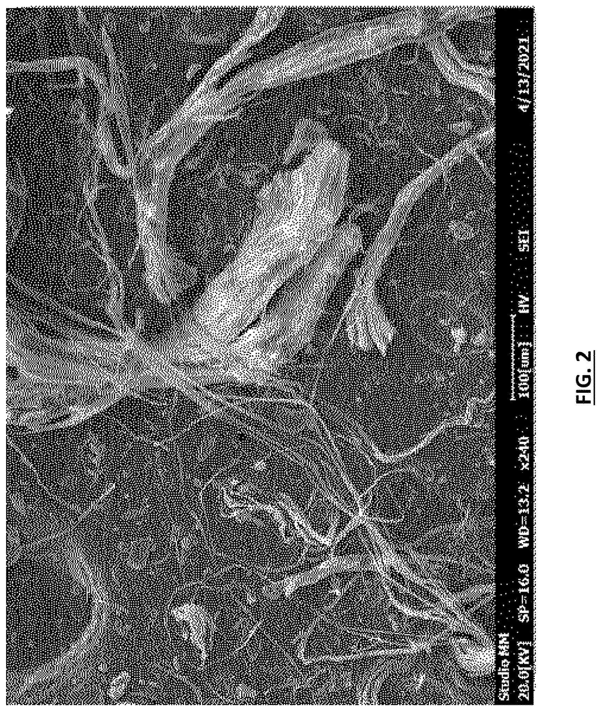

Figure 2 shows the images of the sample at an x240 magnification that clearly shows the complexity of the leather matrix, consisting of single fibers and clusters of fibers.

The density of this material was about 0.09 g/cm³. Said density was determined by subjecting 2.1 g of leather fibers, inside a 50 cc glass graduated cylinder, to a steel weight with a diameter of 2 cm, a height of 3 cm and a weight of 73 g and measuring the volume occupied by the sample. The density was obtained simply as a ratio between the weight of the sample and its volume.

### EXAMPLE 2 - preparation of leather fibers (CMG)

A sample of the same leather waste of Example 1, coming from a step of shaving a wet blue, and characterized by the spectrum of Figure 1, were chopped into pieces of about 1 cm in size and then fed to a discontinuous CMG mill model N17-22-3K, then filtered with a 3 mm grid placed under the granulator.

The fibers thus obtained were characterised under the S.E.M. scanning electron microscope with secondary electrons, revealing the presence in the leather sample of fibre clusters with an average diameter of about 50 µm.

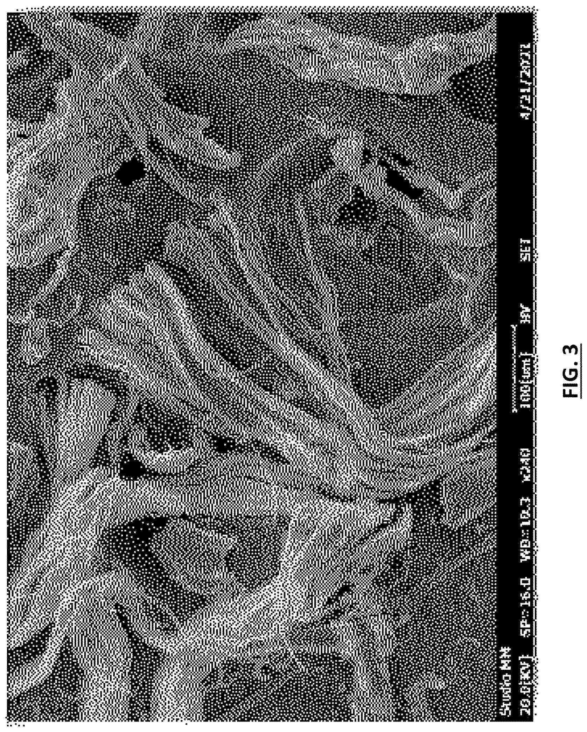

Figure 3 shows the images of the sample at an x240 magnification, from which the largest size of the many clusters present in the sample is evident.

The density of these fibers was about 0.19 g/cm³. Said density was determined by the same method described in the previous example 1.

### EXAMPLE 3 - preparation of polymeric compositions with PHBV and TPU

The leather fibers according to Examples 1 and 2 were used together with polyhydroxybutyrate-co-valerate (PHBV) or thermoplastic polyurethane (TPU), both of commercial grade.

In Table 1 the polymeric compositions prepared and the operating conditions of mixing adopted.

**Table 1 - Polymeric compositions and relative adopted mixing operating conditions**

| Composition | PHBV (% by weight) | TPU (% by weight) | Leather fibers Example 1 (% by weight) | Leather fibers Example 2 (% by weight) | Mixing conditions | | |
|---|---|---|---|---|---|---|---|
| | | | | | Mixer speed (rpm) | Temperature (°C) | Time (minutes) |
| 1 | 100 | - | - | - | 50 | 180 | 6 |
| 2 | 80 | - | 20 | - | 50 | 180 | 6 |
| 3 | 70 | - | 30 | - | 50 | 180 | 6 |
| 4 | 55 | - | 45 | - | 50 | 180 | 6 |
| 5 | 80 | - | - | 20 | 50 | 180 | 6 |
| 6 | 70 | - | - | 30 | 50 | 180 | 6 |
| 7 | - | 100 | - | - | 50 | 190 | 6 |
| 8 | | 90 | 10 | - | 50 | 190 | 6 |
| 9 | | 70 | 30 | - | 50 | 190 | 6 |
| 10 | | 50 | 50 | - | 50 | 190 | 6 |

The polymeric compositions thus obtained were ground with a CMG granulator provided with a 3mm grid. The granules thus obtained were then compression molded in a Carver model C press under the following conditions:
- temperature 180°C;
- compressive force 30 kN;
to obtain 5 cm x 5 cm x 3 mm thick plates.

The plates thus prepared were used to determine the coefficient of static friction (COF). The static COF was measured by the ratio between the weight placed on the plate and the force needed to drag it. The tests were carried out according to ISO 8295.

The tests were carried out on a dry and wet Gress tile.

The following table 2 shows the static COF values recorded on a dry and wet Gress tile respectively.

**Table 2 - Static COF on dry and wet Gress tile**

| | Dry COF (N) | Wet COF (N) |
|---|---|---|
| Composition 1 (100% PHBV) | 24 | 20 |
| Composition 2 (80%PHBV-20%leather fibers Example 1) | 26 | 21 |
| Composition 3 (70%PHBV-30%leather fibers Example 1) | 29 | 23 |
| Composition 4 (55%PHBV-45%leather fibers Example 1) | 30 | 24 |
| Composition 5 (80%PHV-20%leather fibers Example 2) | 26 | 21 |
| Composition 6 (70%PHBV-30%leather fibers Example 2) | 28 | 23 |
| Composition 7 (TPU only) | 22 | 22 |
| Composition 8 (90%TPU-10 %leather fibers Example 1) | 22 | 23 |
| Composition 9 (70%TPU-30 %leather fibers Example 1) | 23 | 27 |
| Composition 10 (50%TPU-50 %leather fibers Example 1) | 19 | 25 |

As for the composites with PHBV, both on dry and wet conditions, a sharp increase (40%) in the static COF with the leather fibers of both Example 1 and 2 was noted.

Without wishing to be bound by a specific theory, it is believed that this improvement is attributable to the greater surface area of contact caused by the leather fibers and the hygroscopicity of the leather fibers that tend to dry the surface and remove the water from under the test plate.

In the case of compositions with TPU with 30% leather fibers, an increase by 23% of friction was obtained on the wet Gress tile, until reaching static COF values comparable with those obtainable, under the same test conditions, from high grip rubber soles (Vibram, static COF measured under the same conditions of 30 N). This result is considered significant, as TPUs are generally known to show significantly lower static COF values than rubber.

### EXAMPLE 4 - preparation of polymeric compositions with natural rubber (NR) and synthetic elastomer butadiene rubber (BR)

A sample of the same leather waste of example 1, coming from a step of shaving a wet blue, was ground for 15 minutes with a CMS grinder having two fixed blades and three rotating blades, with vertical load.

The apparent density of this sample, determined by placing 20 g of ground leather inside a 100 ml cylinder, without exerting any pressure on it, and measuring the volume occupied by the sample, was equal to 0.083 g/cm³.

A mixture of natural rubber (NR) and butadiene rubber (BR) containing the following additional ingredients was used for the preparation of the sample: carbon black, oils, zinc oxide, stearin, IPPD (antioxidant), TMQ (Poly (1,2-dihydro-2,2,4-trimethyl-quinoline)), Polyplastol 19 (a commercial mixture of selected fatty acids, used to reduce the viscosity of the mixture), coumarone resin (antioxidant), sulfur and TBBS (N-tert-butyl-2-benzothiazole sulfenamide)(accelerants).

To this base mixture (Standard) the ground sample was added in such an amount as to obtain a final mixture having 10.1 % by weight of ground leather with respect to the total weight of the mixture.

On the standard mixture and on the mixture added with ground leather, grip tests were performed, in triplicate, measuring the coefficient of static friction and the coefficient of dynamic friction in dry conditions.

The following Table 3 shows the results obtained in the two cases.

**Table 3 - values of the coefficients of static and dynamic friction on dry basis for samples of standard mixture of elastomers and the same mixture but comprising 10.1% of ground leather.**

| Coefficient of static friction | | | | |
|---|---|---|---|---|
| | 1st test | 2nd test | 3rd test | Average |
| Standard | 0.892 | 0.825 | 0.991 | 0.902 |
| Sample with 10.1% ground leather | 0.929 | 0.992 | 1.003 | 0.974 |

| Coefficient of dynamic friction | | | | |
|---|---|---|---|---|
| Standard | 0.910 | 0.894 | 0.757 | 0.853 |
| Sample with 10.1% ground leather | 1.029 | 1.084 | 1.121 | 1.078 |

As is evident, both the value of the coefficient of static friction and the value of the coefficient of dynamic friction of the mixture added with the ground wet blue waste were clearly higher than the corresponding values of a standard mixture. The tests therefore demonstrated the excellent effects of the addition of even only about 10% of ground leather on the anti-slip properties of natural rubber and synthetic elastomer mixtures.

Ultimately, the tests carried out using waste leather ground to different particle sizes showed the remarkable anti-slip properties of these materials when used in mixture with polymers of various kinds such as polyesters, polyurethanes, natural rubbers and synthetic elastomers.

The polymers added with ground leather waste therefore have excellent anti-slip properties that make them suitable for the manufacture of products where this characteristic is essential, such as soles for footwear or specific road and industrial floors.

## Claims

1. A use of leather fibers as anti-slip agent in a polymeric composition comprising at least one polymer selected from the group consisting of: polyester, polyolefin, polyamide, polyurethane, natural rubber, and synthetic elastomer.

2. The use according to claim 1, wherein said leather fibers have clusters of leather fibers with an average section diameter ranging from 10 µm to 200 µm, preferably from 20 µm to 100 µm.

3. The use according to claim 1 or 2, wherein said polymeric composition comprises from 2% to 50% by weight, more preferably from 5% to 45% by weight of said leather fibers, with respect to the total weight of the polymeric composition.

4. The use according to any one of claims 1 to 3, wherein said leather fibers comprise a shredded product deriving from a step of a tanning process selected from the group consisting of: skiving, shaving, trimming, or from leather post-consumer.

5. The use according to any one of claims 1 to 4, wherein said polyester is selected from the group consisting of polylactic acid, polyhydroxybutyrate, polyhydroxyvalerate, and polyhydroxybutyrate-co-valerate, preferably is polyhydroxybutyrate.

6. The use according to any one of claims 1 to 4, wherein said polyolefin is polyethylene, preferably low or high density polyethylene, high or low density polyethylene mixed with other polyolefin-based polymers, preferably polypropylene, polyethylene high or low density copolymerized with other olefinic and diene monomers, or their mixtures with natural rubbers or synthetic elastomers.

7. The use according to any one of claims 1 to 4, wherein said polyamide is polylaurolactam (nylon 12) or polyamide 11 (nylon 11).

8. The use according to any one of claims 1 to 4, wherein said polyurethane is a thermoplastic polyurethane obtained from aromatic isocyanates and flexible chains based on polyether or polyester.

9. The use according to any one of claims 1 to 4, wherein said synthetic elastomer is NBR rubber (nitrile butadiene rubber), BR rubber (butadiene rubber), styrene butadiene rubber (SBR), butadiene-ethylene-propylene terpolymers (EPDM) and their mixtures, preferably it is a mixture of natural rubber (NR) and butadiene rubber (BR).

10. An anti-slip sole comprising a polymeric composition comprising a polymeric matrix comprising at least one polymer selected from the group consisting of: polyester, polyolefin, polyamide, polyurethane, natural rubber, and synthetic elastomer, and at least one leather fiber dispersed in said polymeric matrix.

11. The anti-slip sole according to claim 10, wherein said at least one leather fiber has clusters of leather fibers with an average diameter of the section ranging from 10 µm to 200 µm, preferably from 20 µm to 100 µm.

12. A process of preparing an anti-slip sole comprising the steps of:
a. preparing a quantity of leather fibers;
b. dispersing said quantity of leather fibers according to step a. in at least one polymer selected from the group consisting of: polyester, polyolefin, polyamide, polyurethane, natural rubber and, melt synthetic elastomer, so as to obtain a polymeric composition comprising a matrix comprising at least one polymer selected from the group consisting of: polyester , polyolefin, polyamide, polyurethane, natural rubber, and synthetic elastomer and at least one leather fiber dispersed in said polymeric matrix; and
c. forming an anti-slip sole with the polymer composition of step b.

13. The process of preparing according to claim 12, wherein in step (b) the polymer used is a natural rubber or a synthetic elastomer, and said process comprises a vulcanization or crosslinking step of the polymer.

14. A shoe comprising the anti-slip sole according to any one of claims 10 or 11, or obtained by the process according to claim 12 or 13.
